# EUROPEAN PATENT APPLICATION

(11) **EP 3 432 151 A1**
(43) Date of publication of application: **23.01.2019**
(21) Application number: 16896032.6
(22) Date of filing: 31.03.2016
(51) Int. Cl.: G06F 15/16

(54) **SERVICE NODE SELECTION AND QUERY METHOD, APPARATUS AND SYSTEM**

(71) Applicant: Huawei Technologies Co., Ltd., Longgang District Shenzhen, Guangdong 518129 (CN)
(72) Inventor: WANG, Yuan, Shenzhen Guangdong 518129 (CN); ZHU, Fenqin, Shenzhen Guangdong 518129 (CN); MA, Jingwang, Shenzhen Guangdong 518129 (CN)
(74) Representative: Thun, Clemens
(86) International application number: PCT/CN2016/078220
(87) International publication number: WO 2017/166252

(57) **Abstract**

Embodiments of the present invention provide a service node selection and query method, an apparatus, and a system. The method includes: receiving a request message sent by UE; obtaining a usage type and selection assistance information of the UE based on the request message, where the selection assistance information includes at least one of a dedicated network type and service attribute information; and then determining, based on the usage type and the selection assistance information that are obtained, a service node that serves the UE. The service node selected in this manner is a service node that supports the dedicated network type of the UE and can meet a service requested by the UE this time, so that service success of the UE can be ensured.

## Description

### TECHNICAL FIELD

The present invention relates to communications technologies, and in particular, to a service node selection and query method, an apparatus, and a system.

### BACKGROUND

With continuous evolution of a mobile communications network and continuous emergence of a large quantity of new applications, different users gradually form different communication features in different application fields, so that different mobile communication types are generated, such as machine type communication, mobile virtual network communication, and public security communication. These different communication types are corresponding to different user equipment types. From a perspective of a core network side, different user equipment types have different communication requirements, such as an availability requirement and a congestion management requirement. To meet requirements of different types of user equipments, a control plane service node of a core network, such as a serving GPRS support node (Serving GPRS Support Node, SGSN for short) in a Universal Mobile Telecommunications System (Universal Mobile Telecommunications System, UMTS for short) network, or a mobility management entity (Mobility Management Entity, MME for short) in an evolved packet core (Evolved Packet Core, EPC for short) network needs to support different types of user equipments. For example, when user equipment needs to access a network to request a service, the control plane service node of the core network needs to select a correct user plane service node for the user equipment based on a type of the user equipment. The user plane service node is, for example, a gateway GPRS support node (Gateway GPRS Support Node, GGSN for short) in the UMTS network, or a serving gateway (Server-Gateway, S-GW for short)/a PDN gateway (Public Data Network-Gateway, P-GW for short) in the EPC network. Alternatively, when an incorrect control plane service node is selected for user equipment, a correct control plane service node is re-selected for the user equipment.

In the prior art, a control plane service node of a core network selects a user plane service node or another control plane service node for different user equipments based on a usage type (Usage Type) of user equipment. Specifically, the control plane service node of the core network queries, based on an obtained usage type of the user equipment, a user plane service node or a control plane service node that matches the usage type in a corresponding domain name system (Domain Name System, DNS for short).

However, a user plane service node or a control plane service node selected by using the prior art usually cannot meet an actual service requirement of the user equipment. This causes a service failure.

### SUMMARY

Embodiments of the present invention provide a service node selection and query method, an apparatus, and a system, so as to meet an actual service requirement of user equipment.

A first aspect of an embodiment of the present invention provides a service node selection method, including:
receiving a request message sent by UE; obtaining a usage type and selection assistance information of the UE based on the request message, where the selection assistance information includes at least one of a dedicated network type and service attribute information; and then determining, based on the usage type and the selection assistance information that are obtained, a service node that serves the UE. The service node selected in this manner is a service node that supports the dedicated network type of the UE and can meet a service requested by the UE this time, so that service success of the UE can be ensured.

In a possible design, the foregoing method for obtaining a usage type and selection assistance information of the UE based on the request message is:
obtaining the usage type and the selection assistance information from the request message; or
obtaining the usage type from the request message, and obtaining the dedicated network type based on the usage type and a preset correspondence between the usage type and the dedicated network type.

In a possible design, another method for obtaining a usage type and selection assistance information of the UE based on the request message is:
obtaining the usage type from subscription data of the UE, and obtaining the selection assistance information from the request message; or
obtaining the usage type from subscription data of the UE, and obtaining the dedicated network type based on the usage type and a preset correspondence between the usage type and the dedicated network type; or
obtaining the usage type and the service attribute information from subscription data of the UE.

In a possible design, another method for obtaining a usage type and selection assistance information of the UE based on the request message is:
obtaining the usage type by using a context of the UE, and obtaining the selection assistance information from the request message; or
obtaining the usage type by using a context of the UE, and obtaining the dedicated network type based on the usage type and a preset correspondence between the usage type and the dedicated network type; or
obtaining the usage type by using a context of the UE, and obtaining the service attribute information from subscription data of the UE.

This embodiment of the present invention provides the foregoing plurality of methods to obtain the usage type and the selection assistance information, so that a control plane entity may flexibly select an obtaining manner based on an actual situation, thereby improving obtaining efficiency.

In a possible design, the foregoing method for determining, based on the usage type and the selection assistance information, a service node that needs to be selected is:
determining, based on the usage type and the selection assistance information by using a DNS, the service node that needs to be selected.

The method may be specifically:
sending a service node query message to the DNS, where the service node query message includes the usage type and the selection assistance information; and
receiving a query response message sent by the DNS, where the query response message includes a service node identifier that is of the service node serving the UE and that is obtained by the DNS through a query based on the usage type and the selection assistance information.

In a possible design, another method for determining, based on the usage type and the selection assistance information, a service node that needs to be selected is:
obtaining at least one service node identifier and a correspondence between the service node identifier and the selection assistance information based on the usage type by using a DNS; and
determining, from the at least one service node identifier of the service node based on the selection assistance information and the correspondence between the service node identifier and the selection assistance information, a service node identifier of the service node that serves the UE.

A specific process of obtaining at least one service node identifier and a correspondence between the service node identifier and the selection assistance information by using a DNS may be:
sending a service node query message to the DNS, where the service node query message includes the usage type; and
receiving a query response message sent by the DNS, where the query response message includes the at least one service node identifier of the service node and the correspondence between the service node identifier and the selection assistance information that are obtained by the DNS through a query based on the usage type.

In a possible design, another method for determining, based on the usage type and the selection assistance information, a service node that needs to be selected is:
determining selectable service nodes based on the usage type and the selection assistance information; and
determining, from the selectable service nodes based on network topology information, a service node that is geographically closest to the UE.

In a possible design, the network topology information includes a cell identity of the UE and/or service node topology information.

A second aspect of the present invention provides a service node query method, including:
receiving a service node query message sent by a control plane entity, where the service node query message includes a usage type and selection assistance information of UE, and the selection assistance information includes at least one of a dedicated network type and service attribute information; then, obtaining, based on the usage type and the selection assistance information, a service node identifier of a service node that serves the UE; and finally, sending a query response message to the control plane entity, where the query response message includes the service node identifier of the service node that serves the UE.

In a possible design, the obtaining, based on the usage type and the selection assistance information, a service node identifier of a service node that needs to be selected includes:
querying, in a preset mapping table based on the usage type and the selection assistance information, a service node identifier of a service node that is corresponding to the usage type and the selection assistance information, where the mapping table is used to record a correspondence between the service node identifier, and the usage type and the selection assistance information.

A third aspect of the present invention provides a control plane entity, including:
a receiving module, configured to receive a request message sent by user equipment UE; and
a processing module, configured to: obtain a usage type and selection assistance information of the UE based on the request message, where the selection assistance information includes at least one of a dedicated network type and service attribute information; and
determine, based on the usage type and the selection assistance information, a service node that serves the UE.

In a possible design, the processing module is specifically configured to:
obtain the usage type and the selection assistance information from the request message; or
obtain the usage type from the request message, and obtain the dedicated network type based on the usage type and a preset correspondence between the usage type and the dedicated network type.

In a possible design, the processing module is further specifically configured to:
obtain the usage type from subscription data of the UE, and obtain the selection assistance information from the request message; or
obtain the usage type from subscription data of the UE, and obtain the dedicated network type based on the usage type and a preset correspondence between the usage type and the dedicated network type; or
obtain the usage type and the service attribute information from subscription data of the UE.

In a possible design, the processing module is further specifically configured to:
obtain the usage type by using a context of the UE, and obtain the selection assistance information from the request message; or
obtain the usage type by using a context of the UE, and obtain the dedicated network type based on the usage type and a preset correspondence between the usage type and the dedicated network type; or
obtain the usage type by using a context of the UE, and obtain the service attribute information from subscription data of the UE.

In a possible design, the processing module is further specifically configured to:
determine, based on the usage type and the selection assistance information by using a domain name system DNS, a service node that needs to be selected.

In a possible design, the processing module includes:
a first sending unit, configured to send a service node query message to the DNS, where the service node query message includes the usage type and the selection assistance information; and
a first receiving unit, configured to receive a query response message sent by the DNS, where the query response message includes the service node identifier that is of the service node serving the UE and that is obtained by the DNS through a query based on the usage type and the selection assistance information.

In a possible design, the processing module is further specifically configured to:
obtain at least one service node identifier and a correspondence between the service node identifier and the selection assistance information based on the usage type by using a domain name system DNS; and determine, based on the selection assistance information and the correspondence between the service node identifier and the selection assistance information, a service node identifier of the service node that serves the UE from the at least one service node identifier of the service node.

In a possible design, the processing module further includes:
a second sending unit, configured to send a service node query message to the DNS, where the service node query message includes the usage type; and
a second receiving unit, configured to receive a query response message sent by the DNS, where the query response message includes the at least one service node identifier of the service node and the correspondence between the service node identifier and the selection assistance information that are obtained by the DNS through a query based on the usage type.

In a possible design, the processing module is further specifically configured to:
determine selectable service nodes based on the usage type and the selection assistance information, and determine, from the selectable service nodes based on network topology information, a service node that is geographically closest to the UE.

In a possible design, the network topology information includes a cell identity of the UE and/or service node topology information.

In a possible design, the service attribute information includes at least one of an access point name APN that the UE needs to access, a service request type of the UE, an application server domain name that the UE needs to access, and an application server IP address that the UE needs to access.

In a possible design, the request message is specifically an Attach message, a TAU message, or a PDN setup message.

A fourth aspect of the present invention provides a domain name system, including:
a receiving module, configured to receive a service node query message sent by a control plane entity, where the service node query message includes a usage type and selection assistance information of user equipment UE, and the selection assistance information includes at least one of a dedicated network type and service attribute information;
a processing module, configured to obtain, based on the usage type and the selection assistance information, a service node identifier of a service node that serves the UE; and
a sending module, configured to send a query response message to the control plane entity, where the query response message includes the service node identifier of the service node that serves the UE.

In a possible design, the processing module is specifically configured to:
query, in a preset mapping table based on the usage type and the selection assistance information, a service node identifier of a service node that is corresponding to the usage type and the selection assistance information, where the mapping table is used to record a correspondence between the service node identifier, and the usage type and the selection assistance information.

A fifth aspect of the present invention provides a control plane entity, including a memory and a processor; and
the memory is configured to store a program instruction, and the processor is configured to invoke the program instruction in the memory to perform the following method:
receiving a request message sent by user equipment UE;
obtaining a usage type and selection assistance information of the UE based on the request message, where the selection assistance information includes at least one of a dedicated network type and service attribute information; and
determining, based on the usage type and the selection assistance information, a service node that serves the UE.

In a possible design, the processor is further configured to:
obtain the usage type and the selection assistance information from the request message; or
obtain the usage type from the request message, and obtain the dedicated network type based on the usage type and a preset correspondence between the usage type and the dedicated network type.

In a possible design, the processor is further configured to:
obtain the usage type from subscription data of the UE, and obtain the selection assistance information from the request message; or
obtain the usage type from subscription data of the UE, and obtain the dedicated network type based on the usage type and a preset correspondence between the usage type and the dedicated network type; or
obtain the usage type and the service attribute information from subscription data of the UE.

In a possible design, the processor is further configured to:
obtain the usage type by using a context of the UE, and obtain the selection assistance information from the request message; or
obtain the usage type by using a context of the UE, and obtain the dedicated network type based on the usage type and a preset correspondence between the usage type and the dedicated network type; or
obtain the usage type by using a context of the UE, and obtain the service attribute information from subscription data of the UE.

In a possible design, the processor is further configured to:
determine, based on the usage type and the selection assistance information by using a DNS, the service node that needs to be selected.

In a possible design, the processor is further configured to:
send a service node query message to the DNS, where the service node query message includes a usage type and selection assistance information; and
receive a query response message sent by the DNS, where the query response message includes a service node identifier that is of the service node serving the UE and that is obtained by the DNS through a query based on the usage type and the selection assistance information.

In a possible design, the processor is further configured to:
obtain at least one service node identifier and a correspondence between the service node identifier and the selection assistance information based on the usage type by using a DNS; and determine, based on the selection assistance information and the correspondence between the service node identifier and the selection assistance information, a service node identifier of the service node that serves the UE from the at least one service node identifier of the service node.

In a possible design, the processor is further configured to:
send a service node query message to the DNS, where the service node query message includes the usage type; and
receive a query response message sent by the DNS, where the query response message includes the at least one service node identifier of the service node and the correspondence between the service node identifier and the selection assistance information that are obtained by the DNS through a query based on the usage type.

In a possible design, the processor is further configured to:
determine selectable service nodes based on the usage type and the selection assistance information, and determine, from the selectable service nodes based on network topology information, a service node that is geographically closest to the UE.

In a possible design, the network topology information includes a cell identity of the UE and/or service node topology information.

In a possible design, the service attribute information includes at least one of an access point name APN that the UE needs to access, a service request type of the UE, an application server domain name that the UE needs to access, and an application server IP address that the UE needs to access.

In a possible design, the request message is specifically an Attach message, a TAU message, or a PDN setup message.

A sixth aspect of the present invention provides a domain name system, including a memory and a processor; and
the memory is configured to store a program instruction, and the processor is configured to invoke the program instruction in the memory to perform the following method:
receiving a service node query message sent by a control plane entity, where the service node query message includes a usage type and selection assistance information of UE, and the selection assistance information includes at least one of a dedicated network type and service attribute information;
obtaining, based on the usage type and the selection assistance information, a service node identifier of a service node that serves the UE; and
sending a query response message to the control plane entity, where the query response message includes the service node identifier of the service node that serves the UE.

In a possible design, the processor is specifically configured to:
query, in a preset mapping table based on the usage type and the selection assistance information, a service node identifier of a service node that is corresponding to the usage type and the selection assistance information, where the mapping table is used to record a correspondence between the service node identifier, and the usage type and the selection assistance information.

The solutions in this embodiment of the present invention can be used to select a service node that serves the UE based on the usage type and the selection assistance information, so as to ensure that service success of the UE.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may derive other drawings from these accompanying drawings without creative efforts.
FIG. 1 is a schematic architectural diagram of a service node selection method according to the present invention;
FIG. 2 is a schematic flowchart of Embodiment 1 of a service node selection method according to the present invention;
FIG. 3 is a schematic flowchart of Embodiment 2 of a service node selection method according to the present invention;
FIG. 4 is a schematic flowchart of Embodiment 3 of a service node selection method according to the present invention;
FIG. 5 is a flowchart of an example of a service node selection method according to the present invention;
FIG. 6 is a modular structure diagram of Embodiment 1 of a control plane entity according to an embodiment of the present invention;
FIG. 7 is a modular structure diagram of Embodiment 2 of a control plane entity according to an embodiment of the present invention;
FIG. 8 is a modular structure diagram of Embodiment 3 of a control plane entity according to an embodiment of the present invention;
FIG. 9 is a modular structure diagram of Embodiment 4 of a control plane entity according to an embodiment of the present invention;
FIG. 10 is a modular structure diagram of Embodiment 1 of a domain name system according to an embodiment of the present invention; and
FIG. 11 is a modular structure diagram of Embodiment 2 of a domain name system according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In a 3GPP communications system, a core network may simultaneously support a plurality of UEs of different types. Therefore, a control plane service node (for example, an SGSN in a UMTS network, or an MME in an EPC network) of the core network, and a user plane service node (for example, a GGSN in the UMTS network, or an S-GW/a P-GW in the EPC network) are also required to support a plurality of UEs of different types. For the control plane service node, the UE may access an incorrect control plane service node when accessing a network (that is, the service node accessed by the UE cannot serve the UE). In this case, the control plane service node needs to select a correct control plane service node for the UE, and redirects the UE to a correct (capable of serving the UE) control plane service node. In addition, for the user plane service node, the user plane service node cannot be integrated physically or logically because different services have different service-level agreement (Service-Level Agreement, SLA for short) requirements. For example, a user service such as web browsing does not have a high requirement on a latency and a rate. Therefore, a deployment location of the user plane service node is close to a core network side, so as to avoid frequent switching of the user plane service node when a user moves. However, a user service such as ultra-low latency communication is extremely sensitive to latency, and a deployment location of the user plane service node is required to be closer to a UE side, so as to ensure a service latency requirement. Therefore, there are a plurality of user plane service nodes of different types at different deployment locations in the core network, and the user plane service node needs to be selected based on a specific service requirement of the UE.

Based on the foregoing requirements, the present invention provides a method for selecting an optimal service node that can serve the UE.

Specific meanings of the control plane service node and the user plane service node described in the present invention are as follows.

The control plane service node refers to a network element that provides a control plane service in the 3GPP communications system. A same control plane service node may be simultaneously configured to support a plurality of UEs of different types or of different services, and provides corresponding services for these UEs, for example, a mobile management service, a security service, and a bearer management service that are customized based on a user type. Currently, in the 3GPP communications system, the MME is a control plane service node in a 4G architecture, and the SGSN is a control plane service node in a 3G architecture. It should be noted that, if there is a dedicated network or a network slice in a 5G architecture, a control plane service node in the 5G dedicated network or the 5G network slice should fall within the protection scope of the present invention.

The user plane service node refers to a network element that provides a user plane service in the 3GPP communications system. There are a plurality of user plane service nodes of different types at different deployment locations in the network, and each user plane service node may provide a service for a type of application scenario or user requirement. It should be noted that the user plane service node includes but is not limited to the S-GW and the PDN-GW in a 4G network, and a network entity or function that provides a user plane service for UE in a 5G network. For example, the S-GW and the P-GW in the current EPC network may be considered as user plane service nodes of an MBB service. In 5G, a new network entity or function may exist in the network as a user plane service node to provide another new service, for example, an ultra-low latency communication service. Both the new network entity and the new function belong to the user plane service nodes described in the present invention.

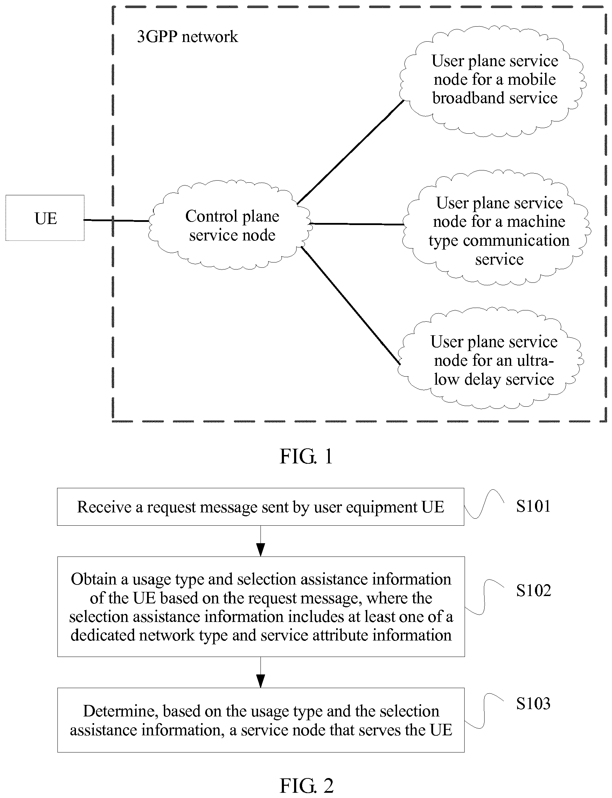

FIG. 1 is a schematic architectural diagram of a service node selection method according to the present invention. As shown in FIG. 1, there are a plurality of user plane service nodes of different types at different deployment locations in a network. Each user plane service node may provide a service for a type of application scenario or user requirement. UE selects, by using a control plane service node, a user plane service node that may serve the UE.

FIG. 2 is a schematic flowchart of Embodiment 1 of a service node selection method according to the present invention. As shown in FIG. 2, an execution body of the method is a control plane entity. The control plane entity may be a control plane service node that actually serves UE, or may be a control plane node that receives a UE request, for example, an MME, an SGSN, or an entity performing a control plane function in a 5G network. The method includes the following.

S101. Receive a request message sent by user equipment UE.

The request message sent by the UE may be an Attach message, a TAU message, a PDN setup message, or another message related to user plane bearer setup. That is, any message that can trigger the control plane entity to perform service node selection may be referred to as the request message of the UE.

The Attach message is an attach message, the TAU message is a tracking area update message, and the PDN setup message is a PDN Connectivity Req message.

S102. Obtain a usage type and selection assistance information of the UE based on the request message, where the selection assistance information includes at least one of a dedicated network type and service attribute information.

The usage type is Usage Type.

The dedicated network type is a type of a dedicated core network that is allocated by a network to the UE based on a specific type and capability of the UE and/or a local policy of the network and a specific deployment manner, and the like after the UE performs subscription or registers with the network. Preferably, the dedicated network type is DCN Type.

The service attribute information is corresponding to a service/service requested by the UE, and is used to specify a service/service that the UE expects to obtain in this request. The service attribute information includes but is not limited to an access point name (Access Point Name, APN for short) that the UE needs to access, a service request type Service Type of the UE, an application server domain name that the UE needs to access, and an application server IP address that the UE needs to access.

It should be noted that the usage type and the dedicated network type of the UE are attributes of the UE, and cannot identify a specific service request of the UE, and the service attribute information of the UE can identify the specific service request of the UE. For example, a usage type of UE may be an MBB type, and a dedicated network type may be an MBB DCN type. The UE may have a plurality of service requirements, such as voice communication, short message communication, ultra-reliable communication, and ultra-low latency communication, and these service requirements are described by using a service attribute.

S103. Determine, based on the usage type and the selection assistance information, a service node that serves the UE.

The service node may be either a control plane service node or a user plane service node. That is, the control plane entity selects, based on an actual requirement of the UE, a control plane service node or a user plane service node that serves the UE.

Further, after the service node that serves the UE is determined, if the current control plane entity selects another control plane entity, that is, the current control plane entity cannot serve the UE, the current control plane entity may initiate a redirection process to redirect the UE to a control plane entity that can serve the UE. For example, an identifier of the another control plane entity is sent to an access network node, and the access network node redirects the UE based on the identifier.

If the current control plane entity selects the user plane service node, the current control plane entity may send a session setup request or a bearer setup request to the selected user plane service node, so as to set up a user plane bearer for the UE.

In this embodiment, the control plane entity selects a service node that serves the UE based on the usage type and the selection assistance information of the UE, that is, based on the usage type, the control plane entity may further select a service node based on the dedicated network type of the UE and/or the service attribute information of the UE, so that the selected service node is a service node that supports the dedicated network type of the UE and can meet the service requested by the UE this time, thereby ensuring service success of the UE.

In another embodiment, in the foregoing step S102, a specific manner of obtaining the usage type and the selection assistance information of the UE based on the request message of the UE is as follows.

The usage type may be directly obtained from the foregoing request message, that is, the request message may directly carry the usage type; or the usage type may be obtained by querying subscription data of the UE; or the usage type may be obtained by using a context of the UE. For a method for obtaining the usage type by querying the subscription data of the UE, reference may be made to the prior art, and details are not described herein.

The dedicated network type may be directly obtained from the foregoing request message, that is, the request message may directly carry the dedicated network type; or the dedicated network type may be obtained based on the usage type and a preset correspondence between the usage type and the dedicated network type.

The service attribute information may be obtained from the foregoing request message, that is, the request message may directly carry the service attribute information; or the service attribute information may be obtained by querying subscription data of the UE.

Based on the foregoing obtaining manners, the method for obtaining the usage type and the selection assistance information in the foregoing step S102 may specifically include the following.
1. If the selection assistance information is only the dedicated network type, the usage type and the selection assistance information may be obtained in at least one of the following manners:
   (1) The usage type and the dedicated network type are obtained from the request message.
   (2) The usage type is obtained from the request message, and the dedicated network type is obtained based on the preset correspondence between the usage type and the dedicated network type and the usage type.
   (3) The usage type is obtained from the subscription data of the UE, and the dedicated network type is obtained from the request message.
      Before the usage type is obtained from the subscription data of the UE, the subscription data of the UE needs to be obtained first.
      The subscription data of the UE may be obtained from a home subscriber server (Home Subscriber Server, HSS for short) by the control plane entity by performing an update location update location process. An identifier of the UE is included in an update location request message sent by the control plane entity. The HSS returns an update location response message to the control plane entity, and the update location response message includes the subscription data corresponding to the identifier of the UE.
      The following method for obtaining the subscription data of the UE is the same as the foregoing method for obtaining the subscription data of the UE, and details are not described again.
   (4) The usage type is obtained from the subscription data of the UE, and the dedicated network type is obtained based on the preset correspondence between the usage type and the dedicated network type and the usage type.
   (5) The usage type is obtained by using the context of the UE, and the dedicated network type is obtained from the request message.
      Before the usage type is obtained by using the context of the UE, the context of the UE needs to be obtained first.
      Specifically, the control plane entity may send an obtaining context request to a control plane entity that previously serves the UE, where the obtaining context request includes a UE ID; the original control plane entity returns an obtaining context response message, where the obtaining context response message includes the context of the UE, and the context of the UE includes the usage type of the UE; and the control plane entity then obtains the usage type of the UE from the context of the UE.
      The following method for obtaining the context of the UE is the same as the foregoing method for obtaining the context of the UE, and details are not described again.
   (6) The usage type is obtained by using the context of the UE, and the dedicated network type is obtained based on the preset correspondence between the usage type and the dedicated network type and the usage type.
2. If the selection assistance information is only the service attribute information, the usage type and the selection assistance information may be obtained in at least one of the following manners:
   (1) The usage type and a service attribute type are obtained from the request message.
   (2) The usage type is obtained from the request message, and the service attribute information is obtained from the subscription data of the UE.
   (3) The usage type is obtained from the subscription data of the UE, and the service attribute information is obtained from the request message.
   (4) The usage type and the service attribute information are obtained from the subscription data of the UE.
   (5) The usage type is obtained by using the context of the UE, and the service attribute information is obtained from the request message.
   (6) The usage type is obtained by using the context of the UE, and the service attribute information is obtained from the subscription data of the UE.
3. If the selection assistance information includes the dedicated network type and the service attribute information, the obtaining manner of the foregoing step S102 is a further combination of the methods in the foregoing case 1 and case 2, and details are not described herein again. However, any combination that can be deduced from the foregoing case 1 and case 2 falls within the protection scope of the present invention.

Based on the foregoing embodiment, this embodiment relates to a process of determining a service node that needs to be selected based on a usage type and selection assistance information.

Specifically, the service node that needs to be selected is determined by using a DNS based on the usage type and the selection assistance information.

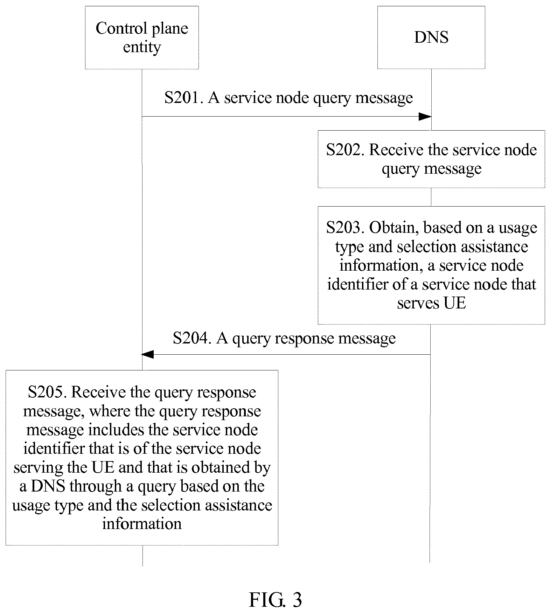

FIG. 3 is a schematic flowchart of Embodiment 2 of a service node selection method according to the present invention. As shown in FIG. 3, a specific process of determining a service node that needs to be selected by using a DNS is as follows.

S201. A control plane entity sends a service node query message to the domain name system DNS.

The service node query message includes the foregoing usage type and the selection assistance information.

S202. The DNS receives the service node query message sent by the control plane entity.

The service node query message includes the usage type and the selection assistance information of UE, and the selection assistance information includes at least one of a dedicated network type and service attribute information.

S203. The DNS obtains, based on a usage type and selection assistance information, a service node identifier of a service node that serves UE.

S204. The DNS sends a query response message to the control plane entity.

The query response message includes the service node identifier of the service node that serves the UE.

S205. The control plane entity receives the query response message sent by the DNS, where the query response message includes the service node identifier that is of the service node serving the UE and that is obtained by the DNS through a query based on the usage type and the selection assistance information.

In this embodiment, after the usage type and the selection assistance information of the UE are obtained, the information is sent to the DNS. The DNS stores different correspondences between the service node, and the usage type and the selection assistance information. After finding, based on the information, the service node that meets the request of the UE, the DNS returns the service node identifier of the selected service node that serves the UE. In this way, an accurate selection of a service node is implemented.

In another embodiment, the foregoing step S203 specifically includes:
querying, in a preset mapping table based on the usage type and the selection assistance information, a service node identifier of a service node that is corresponding to the usage type and the selection assistance information, where the mapping table is used to record a correspondence between the service node identifier, and the usage type and the selection assistance information.

Based on the foregoing embodiment, this embodiment relates to another method for determining a service node needs to be selected based on the usage type and the selection assistance information.

Specifically, the method includes: obtaining at least one service node identifier and a correspondence between the service node identifier and the selection assistance information based on the usage type by using a DNS; and
determining, from the at least one service node identifier of the service node based on the selection assistance information and the correspondence between the service node identifier and the selection assistance information, a service node identifier of the service node that serves the UE.

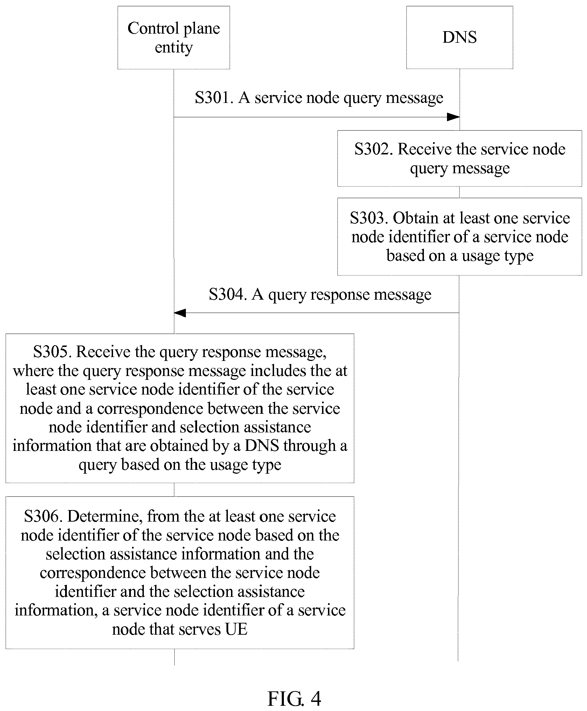

FIG. 4 is a schematic flowchart of Embodiment 3 of a service node selection method according to the present invention. As shown in FIG. 4, a specific process of obtaining at least one service node identifier and a correspondence between the service node identifier and the selection assistance information by using a DNS is as follows.

S301. A control plane entity sends a service node query message to the DNS, where the service node query message includes a usage type.

S302. The DNS receives the service node query message sent by the control plane entity.

The service node query message includes the usage type of UE.

S303. The DNS obtains the at least one service node identifier of a service node based on the usage type.

S304. The DNS sends a query response message to the control plane entity, where the query response message includes the at least one service node identifier of the service node and the correspondence between the service node identifier and the selection assistance information.

S305. The control plane entity receives the query response message sent by the DNS.

The query response message includes the at least one service node identifier of the service node and the correspondence between the service node identifier and the selection assistance information that are obtained by the DNS through a query based on the usage type.

S306. The control plane entity determines, from the at least one service node identifier of the service node based on the selection assistance information and the correspondence between the service node identifier and the selection assistance information, a service node identifier of a service node that serves UE.

In this embodiment, the control plane service node sends only the usage type to the DNS, and then determines, based on a query result of the DNS and with reference to the selection assistance information, the service node that serves the UE. In this embodiment, no change is needed on the DNS side, and the control plane service node selects the service node that serves the UE, so as to reduce network element changes, thereby improving execution efficiency.

Based on the foregoing embodiment, that is, selectable service nodes are determined based on the usage type and the selection assistance information, the control plane entity may further select a better service node based on current network topology.

Specifically, after the selectable service nodes are determined based on the usage type and the selection assistance information, a service node that is geographically closest to the UE is determined from the selectable service nodes based on network topology information.

If the network topology information is a cell identity of the UE, an access network node may report the network topology information to the control plane entity when forwarding a UE request message. If the network topology information is service node topology information, the network topology information may be preconfigured in the control plane entity.

Optionally, the network topology information includes the cell identity of the UE and/or user plane service node topology information.

In a specific implementation process, if the service node identifier is queried by using the DNS, the usage type, the selection assistance information, and the network topology information may be all sent to the DNS for centralized query by the DNS. Alternatively, the control plane service node may interact with the DNS for a plurality of times, and determines, based on a result of each interaction, whether a query needs to be performed again. This is not limited in the present invention.

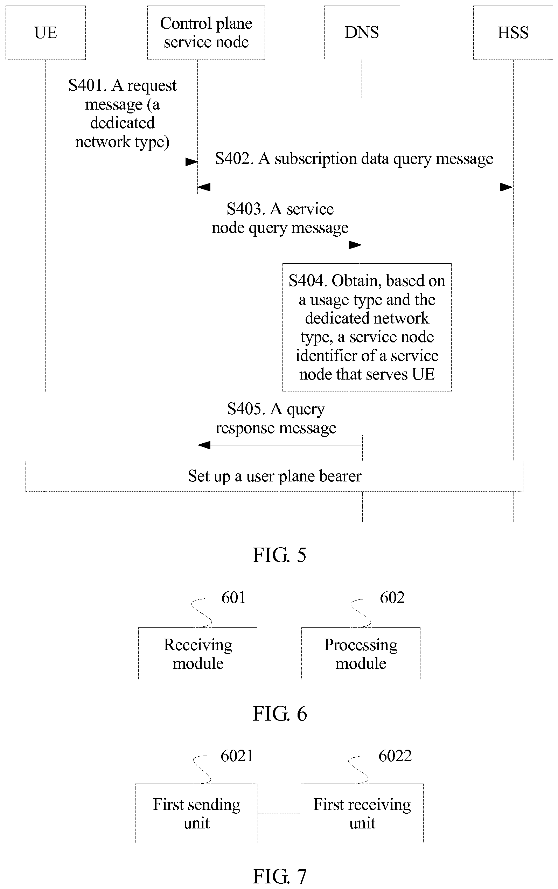

FIG. 5 is a flowchart of an example of a service node selection method according to the present invention. In FIG. 5, an example in which a control plane service node is an execution body, and selection assistance information is only a dedicated network type, and the dedicated network type is carried in a request message is used. As shown in FIG. 5, a process of service node selection is as follows.

S401. UE sends a request message to the control plane service node, where the request message includes the dedicated network type.

The request message of the UE also includes an identifier of the UE.

S402. The control plane service node obtains a usage type of the UE from subscription data of the UE.

The subscription data of the UE may be obtained from a home subscriber server (Home Subscriber Server, HSS for short) by performing an update location update location process. The obtained identifier of the UE is included in an update location request message sent by the control plane service node. The HSS returns an update location response message to the control plane service node, and the update location response message includes the subscription data corresponding to the identifier of the UE. The control plane service node then obtains the usage type of the UE from the subscription data of the UE based on the identifier of the UE.

S403. The control plane service node sends a service node query message to the DNS.

The service node query message includes the usage type and the dedicated network type.

S404. The DNS obtains, based on the usage type and the dedicated network type, a service node identifier of a service node that serves the UE.

S405. The DNS sends a query response message to the control plane service node.

The query response message includes the service node identifier of the service node that serves the UE.

Based on the service node identifier of the service node that serves the UE, the control plane service node may set up a user plane bearer for the UE.

FIG. 6 is a modular structure diagram of Embodiment 1 of a control plane entity according to an embodiment of the present invention. As shown in FIG. 6, the control plane entity includes:
a receiving module 601, configured to receive a request message sent by UE; and
a processing module 602, configured to: obtain a usage type and selection assistance information of the UE based on the request message, where the selection assistance information includes at least one of a dedicated network type and service attribute information; and
determine, based on the usage type and the selection assistance information, a service node that serves the UE.

The control plane entity is configured to implement the foregoing method embodiments. An implementation principle and a technical effect of the control plane entity are similar to those of the method embodiments. Details are not described herein again.

In another embodiment, the processing module 602 is specifically configured to:
obtain the usage type and the selection assistance information from the request message; or
obtain the usage type from the request message, and obtain the dedicated network type based on the usage type and a preset correspondence between the usage type and the dedicated network type.

In another embodiment, the processing module 602 is further specifically configured to:
obtain the usage type from subscription data of the UE, and obtain the selection assistance information from the request message; or
obtain the usage type from subscription data of the UE, and obtain the dedicated network type based on the usage type and a preset correspondence between the usage type and the dedicated network type; or
obtain the usage type and the service attribute information from subscription data of the UE.

In another embodiment, the processing module 602 is further specifically configured to:
obtain the usage type by using a context of the UE, and obtain the selection assistance information from the request message; or
obtain the usage type by using a context of the UE, and obtain the dedicated network type based on the usage type and a preset correspondence between the usage type and the dedicated network type; or
obtain the usage type by using a context of the UE, and obtain the service attribute information from subscription data of the UE.

In another embodiment, the processing module 602 is further specifically configured to:
determine, based on the usage type and the selection assistance information by using a DNS, a service node that needs to be selected.

FIG. 7 is a modular structure diagram of Embodiment 2 of a control plane entity according to an embodiment of the present invention. As shown in FIG. 7, a processing module 602 includes:
a first sending unit 6021, configured to send a service node query message to a DNS, where the service node query message includes a usage type and selection assistance information; and
a first receiving unit 6022, configured to receive a query response message sent by the DNS, where the query response message includes a service node identifier that is of a service node serving UE and that is obtained by the DNS through a query based on the usage type and the selection assistance information.

In another embodiment, the processing module 602 is further specifically configured to:
obtain at least one service node identifier and a correspondence between the service node identifier and the selection assistance information based on the usage type by using a DNS; and determine, based on the selection assistance information and the correspondence between the service node identifier and the selection assistance information, a service node identifier of the service node that serves the UE from the at least one service node identifier of the service node.

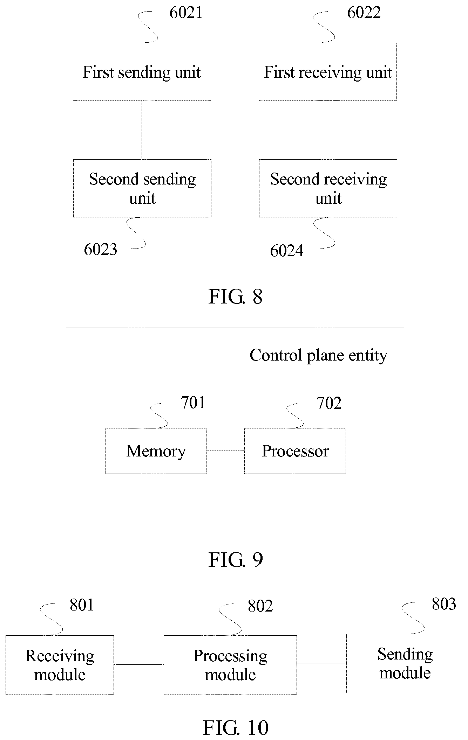

FIG. 8 is a modular structure diagram of Embodiment 3 of a control plane entity according to an embodiment of the present invention. As shown in FIG. 8, based on FIG. 7, the processing module 602 further includes:
a second sending unit 6023, configured to send a service node query message to the DNS, where the service node query message includes the usage type; and
a second receiving unit 6024, configured to receive a query response message sent by the DNS, where the query response message includes the at least one service node identifier of the service node and the correspondence between the service node identifier and the selection assistance information that are obtained by the DNS through a query based on the usage type.

In another embodiment, the processing module 602 is further specifically configured to:
determine selectable service nodes based on the usage type and the selection assistance information, and determine, from the selectable service nodes based on network topology information, a service node that is geographically closest to the UE.

In another embodiment, the network topology information includes a cell identity of the UE and/or service node topology information. The service attribute information includes at least one of an access point name APN that the UE needs to access, a service request type of the UE, an application server domain name that the UE needs to access, and an application server IP address that the UE needs to access.

In another embodiment, the request message is specifically an Attach message, a TAU message, or a PDN setup message.

FIG. 9 is a modular structure diagram of Embodiment 4 of a control plane entity according to an embodiment of the present invention. As shown in FIG. 9, the control plane entity includes a memory 701 and a processor 702.

The memory 701 is configured to store a program instruction, and the processor 702 is configured to invoke the program instruction in the memory 701 to perform the following method:
receiving a request message sent by user equipment UE;
obtaining a usage type and selection assistance information of the UE based on the request message, where the selection assistance information includes at least one of a dedicated network type and service attribute information; and
determining, based on the usage type and the selection assistance information, a service node that serves the UE.

Further, the processor 702 is configured to:
obtain the usage type and the selection assistance information from the request message; or
obtain the usage type from the request message, and obtain the dedicated network type based on the usage type and a preset correspondence between the usage type and the dedicated network type.

Further, the processor 702 is configured to:
obtain the usage type from subscription data of the UE, and obtain the selection assistance information from the request message; or
obtain the usage type from subscription data of the UE, and obtain the dedicated network type based on the usage type and a preset correspondence between the usage type and the dedicated network type; or
obtain the usage type and the service attribute information from subscription data of the UE.

Further, the processor 702 is configured to:
obtain the usage type by using a context of the UE, and obtain the selection assistance information from the request message; or
obtain the usage type by using a context of the UE, and obtain the dedicated network type based on the usage type and a preset correspondence between the usage type and the dedicated network type; or
obtain the usage type by using a context of the UE, and obtain the service attribute information from subscription data of the UE.

Further, the processor 702 is configured to:
determine, based on the usage type and the selection assistance information by using a DNS, a service node that needs to be selected.

Further, the processor 702 is configured to:
send a service node query message to the DNS, where the service node query message includes the usage type and the selection assistance information; and
receive a query response message sent by the DNS, where the query response message includes a service node identifier that is of the service node serving the UE and that is obtained by the DNS through a query based on the usage type and the selection assistance information.

Further, the processor 702 is configured to:
obtain at least one service node identifier and a correspondence between the service node identifier and the selection assistance information based on the usage type by using a DNS; and determine, based on the selection assistance information and the correspondence between the service node identifier and the selection assistance information, a service node identifier of the service node that serves the UE from the at least one service node identifier of the service node.

Further, the processor 702 is configured to:
send a service node query message to the DNS, where the service node query message includes the usage type; and
receive a query response message sent by the DNS, where the query response message includes the at least one service node identifier of the service node and the correspondence between the service node identifier and the selection assistance information that are obtained by the DNS through a query based on the usage type.

Further, the processor 702 is configured to:
determine selectable service nodes based on the usage type and the selection assistance information, and determine, from the selectable service nodes based on network topology information, a service node that is geographically closest to the UE.

In another embodiment, the network topology information includes a cell identity of the UE and/or service node topology information.

In another embodiment, the service attribute information includes at least one of an access point name APN that the UE needs to access, a service request type of the UE, an application server domain name that the UE needs to access, and an application server IP address that the UE needs to access.

In another embodiment, the request message is specifically an Attach message, a TAU message, or a PDN setup message.

FIG. 10 is a modular structure diagram of Embodiment 1 of a domain name system according to an embodiment of the present invention. As shown in FIG. 10, the domain name system includes:
a receiving module 801, configured to receive a service node query message sent by a control plane entity, where the service node query message includes a usage type and selection assistance information of UE, and the selection assistance information includes at least one of a dedicated network type and service attribute information;
a processing module 802, configured to obtain, based on the usage type and the selection assistance information, a service node identifier of a service node that serves the UE; and
a sending module 803, configured to send a query response message to the control plane entity, where the query response message includes the service node identifier of the service node that serves the UE.

The domain name system is configured to implement the foregoing method embodiments. An implementation principle and a technical effect of the domain name system are similar to those of the method embodiments. Details are not described herein again.

In another embodiment, the processing module 802 is specifically configured to:
query, in a preset mapping table based on the usage type and the selection assistance information, a service node identifier of a service node that is corresponding to the usage type and the selection assistance information, where the mapping table is used to record a correspondence between the service node identifier, and the usage type and the selection assistance information.

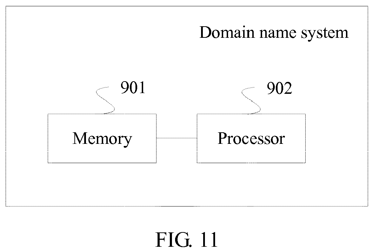

FIG. 11 is a modular structure diagram of Embodiment 2 of a domain name system according to an embodiment of the present invention. As shown in FIG. 11, the domain name system includes a memory 901 and a processor 902.

The memory 901 is configured to store a program instruction, and the processor 902 is configured to invoke the program instruction in the memory 901 to perform the following method:
receiving a service node query message sent by a control plane entity, where the service node query message includes a usage type and selection assistance information of UE, and the selection assistance information includes at least one of a dedicated network type and service attribute information;
obtaining, based on the usage type and the selection assistance information, a service node identifier of a service node that serves the UE; and
sending a query response message to the control plane entity, where the query response message includes the service node identifier of the service node that serves the UE.

Further, the processor 902 is specifically configured to:
query, in a preset mapping table based on the usage type and the selection assistance information, a service node identifier of a service node that is corresponding to the usage type and the selection assistance information, where the mapping table is used to record a correspondence between the service node identifier, and the usage type and the selection assistance information.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A service node selection method, comprising:
receiving a request message sent by user equipment UE;
obtaining a usage type and selection assistance information of the UE based on the request message, wherein the selection assistance information comprises at least one of a dedicated network type and service attribute information; and
determining, based on the usage type and the selection assistance information, a service node that serves the UE.

2. The method according to claim 1, wherein the obtaining a usage type and selection assistance information of the UE based on the request message comprises:
obtaining the usage type and the selection assistance information from the request message; or
obtaining the usage type from the request message, and obtaining the dedicated network type based on the usage type and a preset correspondence between the usage type and the dedicated network type.

3. The method according to claim 1, wherein the obtaining a usage type and selection assistance information of the UE based on the request message comprises:
obtaining the usage type from subscription data of the UE, and obtaining the selection assistance information from the request message; or
obtaining the usage type from subscription data of the UE, and obtaining the dedicated network type based on the usage type and a preset correspondence between the usage type and the dedicated network type; or
obtaining the usage type and the service attribute information from subscription data of the UE.

4. The method according to claim 1, wherein the obtaining a usage type and selection assistance information of the UE based on the request message comprises:
obtaining the usage type by using a context of the UE, and obtaining the selection assistance information from the request message; or
obtaining the usage type by using a context of the UE, and obtaining the dedicated network type based on the usage type and a preset correspondence between the usage type and the dedicated network type; or
obtaining the usage type by using a context of the UE, and obtaining the service attribute information from subscription data of the UE.

5. The method according to any one of claims 1 to 4, wherein the determining, based on the usage type and the selection assistance information, a service node that needs to be selected comprises:
determining, based on the usage type and the selection assistance information by using a domain name system DNS, the service node that needs to be selected.

6. The method according to claim 5, wherein the determining, by using a domain name system DNS, the service node that needs to be selected comprises:
sending a service node query message to the DNS, wherein the service node query message comprises the usage type and the selection assistance information; and
receiving a query response message sent by the DNS, wherein the query response message comprises a service node identifier that is of the service node serving the UE and that is obtained by the DNS through a query based on the usage type and the selection assistance information.

7. The method according to any one of claims 1 to 4, wherein the determining, based on the usage type and the selection assistance information, a service node that needs to be selected comprises:
obtaining at least one service node identifier and a correspondence between the service node identifier and the selection assistance information based on the usage type by using a domain name system DNS; and
determining, from the at least one service node identifier of the service node based on the selection assistance information and the correspondence between the service node identifier and the selection assistance information, a service node identifier of the service node that serves the UE.

8. The method according to claim 7, wherein the obtaining at least one service node identifier and a correspondence between the service node identifier and the selection assistance information by using a domain name system DNS comprises:
sending a service node query message to the DNS, wherein the service node query message comprises the usage type; and
receiving a query response message sent by the DNS, wherein the query response message comprises the at least one service node identifier of the service node and the correspondence between the service node identifier and the selection assistance information that are obtained by the DNS through a query based on the usage type.

9. The method according to any one of claims 1 to 8, wherein the determining, based on the usage type and the selection assistance information, a service node that serves the UE comprises:
determining selectable service nodes based on the usage type and the selection assistance information; and
determining, from the selectable service nodes based on network topology information, a service node that is geographically closest to the UE.

10. The method according to claim 9, wherein the network topology information comprises a cell identity of the UE and/or service node topology information.

11. The method according to any one of claims 1 to 10, wherein the service attribute information comprises at least one of an access point name APN that the UE needs to access, a service request type of the UE, an application server domain name that the UE needs to access, and an application server IP address that the UE needs to access.

12. The method according to any one of claims 1 to 11, wherein the request message is specifically an Attach message, a TAU message, or a PDN setup message.

13. A service node query method, comprising:
receiving a service node query message sent by a control plane entity, wherein the service node query message comprises a usage type and selection assistance information of user equipment UE, and the selection assistance information comprises at least one of a dedicated network type and service attribute information;
obtaining, based on the usage type and the selection assistance information, a service node identifier of a service node that serves the UE; and
sending a query response message to the control plane entity, wherein the query response message comprises the service node identifier of the service node that serves the UE.

14. The method according to claim 13, wherein the obtaining, based on the usage type and the selection assistance information, a service node identifier of a service node that needs to be selected comprises:
querying, in a preset mapping table based on the usage type and the selection assistance information, a service node identifier of a service node that is corresponding to the usage type and the selection assistance information, wherein the mapping table is used to record a correspondence between the service node identifier, and the usage type and the selection assistance information.

15. A control plane entity, comprising:
a receiving module, configured to receive a request message sent by user equipment UE; and
a processing module, configured to: obtain a usage type and selection assistance information of the UE based on the request message, wherein the selection assistance information comprises at least one of a dedicated network type and service attribute information; and
determine, based on the usage type and the selection assistance information, a service node that serves the UE.

16. The control plane entity according to claim 15, wherein the processing module is specifically configured to:
obtain the usage type and the selection assistance information from the request message; or
obtain the usage type from the request message, and obtain the dedicated network type based on the usage type and a preset correspondence between the usage type and the dedicated network type.

17. The control plane entity according to claim 15, wherein the processing module is further specifically configured to:
obtain the usage type from subscription data of the UE, and obtain the selection assistance information from the request message; or
obtain the usage type from subscription data of the UE, and obtain the dedicated network type based on the usage type and a preset correspondence between the usage type and the dedicated network type; or
obtain the usage type and the service attribute information from subscription data of the UE.

18. The control plane entity according to claim 15, wherein the processing module is further specifically configured to:
obtain the usage type by using a context of the UE, and obtain the selection assistance information from the request message; or
obtain the usage type by using a context of the UE, and obtain the dedicated network type based on the usage type and a preset correspondence between the usage type and the dedicated network type; or
obtain the usage type by using a context of the UE, and obtain the service attribute information from subscription data of the UE.

19. The control plane entity according to any one of claims 15 to 18, wherein the processing module is further specifically configured to:
determine, by using a domain name system DNS, a service node that needs to be selected, wherein the DNS obtains, based on the usage type and the selection assistance information, a service node identifier of a service node that serves the UE.

20. The control plane entity according to claim 19, wherein the processing module comprises:
a first sending unit, configured to send a service node query message to the DNS, wherein the service node query message comprises the usage type and the selection assistance information; and
a first receiving unit, configured to receive a query response message sent by the DNS, wherein the query response message comprises the service node identifier that is of the service node serving the UE and that is obtained by the DNS through a query based on the usage type and the selection assistance information.

21. The control plane entity according to any one of claims 15 to 18, wherein the processing module is further specifically configured to:
obtain at least one service node identifier and a correspondence between the service node identifier and the selection assistance information by using a domain name system DNS, wherein the DNS obtains the at least one service node identifier and the correspondence between the service node identifier and the selection assistance information based on the usage type; and determine, based on the selection assistance information and the correspondence between the service node identifier and the selection assistance information, a service node identifier of the service node that serves the UE from the at least one service node identifier of the service node.

22. The control plane entity according to claim 21, wherein the processing module further comprises:
a second sending unit, configured to send a service node query message to the DNS, wherein the service node query message comprises the usage type; and
a second receiving unit, configured to receive a query response message sent by the DNS, wherein the query response message comprises the at least one service node identifier of the service node and the correspondence between the service node identifier and the selection assistance information that are obtained by the DNS through a query based on the usage type.

23. The control plane entity according to any one of claims 15 to 22, wherein the processing module is further specifically configured to:
determine selectable service nodes based on the usage type and the selection assistance information, and determine, from the selectable service nodes based on network topology information, a service node that is geographically closest to the UE.

24. The control plane entity according to claim 23, wherein the network topology information comprises a cell identity of the UE and/or service node topology information.

25. The control plane entity according to any one of claims 15 to 24, wherein the service attribute information comprises at least one of an access point name APN that the UE needs to access, a service request type of the UE, an application server domain name that the UE needs to access, and an application server IP address that the UE needs to access.

26. The control plane entity according to any one of claims 15 to 25, wherein the request message is specifically an Attach message, a TAU message, or a PDN setup message.

27. A domain name system, comprising:
a receiving module, configured to receive a service node query message sent by a control plane entity, wherein the service node query message comprises a usage type and selection assistance information of user equipment UE, and the selection assistance information comprises at least one of a dedicated network type and service attribute information;
a processing module, configured to obtain, based on the usage type and the selection assistance information, a service node identifier of a service node that serves the UE; and
a sending module, configured to send a query response message to the control plane entity, wherein the query response message comprises the service node identifier of the service node that serves the UE.

28. The domain name system according to claim 37, wherein the processing module is specifically configured to:
query, in a preset mapping table based on the usage type and the selection assistance information, a service node identifier of a service node that is corresponding to the usage type and the selection assistance information, wherein the mapping table is used to record a correspondence between the service node identifier, and the usage type and the selection assistance information.
